# EUROPEAN PATENT APPLICATION

(11) **EP 0 717 924 A1**
(43) Date of publication of application: **26.06.1996**
(21) Application number: 95120430.4
(22) Date of filing: 22.12.1995
(51) Int. Cl.: A01G 17/08

(54) **Old shoot binding machine**

(30) Priority: 22.12.1994 JP 335989/94
(71) Applicant: MAX CO., LTD., Chuo-ku Tokyo (JP)
(72) Inventor: Okushima, Hideki, Chuo-ku, Tokyo (JP)
(74) Representative: von Samson-Himmelstjerna, Friedrich R., Dipl.-Phys.

(57) **Abstract**

In the old shoot binding machine, when the front end portion (11a) of the guide arm (11) is moved away from the body (1), the work (31) is set inside the guide arm (11) and abutted against the abutting piece (26) of the contact arm. Under this condition, the contact plate (25) is moved backwardly. In association with the backward movement of the contact plate (25), the front end portion (11a) of the guide arm (11) is swung closed with respect to the machine body (1). In this first swing operation, the front end portion (11a) of the guide arm (11) is landed near the catching pawl (41), to cause the catching pawl (41) to hold the end portion of the binding belt (a). When, under this condition, the contact plate (25) is moved forwardly against the elastic force of the spring (34), similarly the guide arm (11) is elastically opened moving away from the body (1), so that the binding belt (a) is stretched between the catching pawl (41) and the front end (11a) of the guide arm (11). After the work (31) together with the binding belt (a) is moved forwardly of the body (1), the handle (2) is swung with the hand. In association with this swing, the front end portion (11a) of the guide arm (11) is swung closed with respect to the body (1). In this second swing operation, the front end portion (11a) of the guide arm (11) is landed near the cutting pawl (42) to cause the latter pawl to cut the binding belt (a). Thus, the work (31) is surrounded by the binding belt (a), and the work (31) is bound together by twisting both end portions of the binding belt with the twisting means (48).

## Description

### BACKGROUND OF THE INVENTION

This invention relates to an old shoot binding machine which is used in a vineyard to bind old shoots of grapevines to wire materials such as wires on supporting fences.

An old shoot binding machine of this type is well known in the art which has been disclosed by German Patent No. 2910989.

The conventional old shoot binding machine operates as follows:
A work to be bound (including an old shoot and its supporting wire) is set inside a guide arm which is swung open and closed with respect to the body of the binding machine (hereinafter referred to as "a machine body" or merely as "a body", when applicable). The machine body has a catching pawl at the front end. Under this condition, the handle of the machine is operated to cause the catching pawl to catch the front end portion of a binding belt which has been guided to the end of the guide arm, so that the binding belt is stretched between the guide arm and the body. Under this condition, the binding machine is moved backwardly with respect to the work so that the middle of the binding belt is bent substantially V-shaped by the work. The handle is further operated, so that the binding belt is bent U-shaped. Under this condition, the binding belt is cut with a cutting pawl (provided in front of the catching pawl). Thereafter, the parts of the binding belt left behind the work are twisted with spiral twisting means. Thus, the aimed work has been bound with the binding belt.

In the case where one binding operation is carried out with the above-described conventional old shoot binding machine, in order to catch the binding belt the handle is operated with the hand; that is, the handle is once operated (gripped) with the hand to operate the guide arm; and then in order to cut the binding belt, the handle is operated with the hand again. That is, for one binding operation, the handle must be operated twice. This means that the binding machine is low in working efficiency.

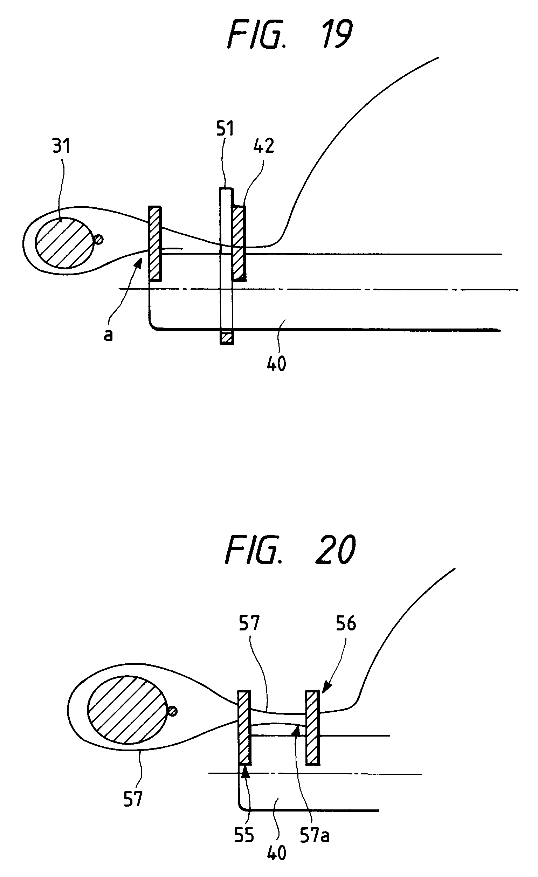

As shown in FIG. 20, the cutting pawl 55 is positioned in front of the catching pawl 56. Hence, in the cutting operation, two parts of the binding belt 57 must be cut; that is, the binding-belt cutting load is relatively great. This fact, in addition to the fact that the handle must be operated twice, may make the operator (worker) tired soon, thus making it impossible for the operator to continue the binding operation for a long time. Moreover, one of the two parts of the binding belt thus obtained by cutting; i.e., the part 57a of the binding belt which is located between the cutting pawl and the catching pawl is discarded as a waste material.

On the other hand, before the work is set inside the guide arm, the handle may be operated by mistake to swing the guide arm. If this mistake occurs, then, since the end portion of the binding belt being caught by the catching pawl, the binding belt is stretched, thus preventing the work from being set inside the guide arm. In addition, a binding belt resetting operation; i.e., releasing the binding belt from the catching pawl is considerably troublesome.

### SUMMARY OF THE INVENTION

An object of the invention is to provide an old shoot binding machine which is free from the above-described difficulties accompanying a conventional old shoot binding machine. More specifically, an object of the invention is to provide an old shoot binding machine high in work efficiency in which the handle gripping operation can be achieved with ease, and the binding-belt cutting load is decreased, and which is substantially free from the formation of the waste binding belt, and is scarcely operated by mistake.

To achieve the objects, the present invention provides an old shoot binding machine comprising:
a machine body extending in a front-to-rear direction of the machine, and having a front end portion, a catching pawl and a cutting pawl formed on the front end portion thereof, the catching and cutting pawls being arranged one after another;
a guide arm having a bent portion to form a space with the body, a front end portion to hold an end portion of a binding belt and a pivot on which the guide arm pivotably arranged, such that the front end portion thereof is moved to and from the front end portion of the machine body, and elastically urged so as to be normally opened; and
binding-belt twisting means on the body, for twisting the binding belt,
CHARACTERIZED in that,
(a) the old shoot binding machine further comprises a contact plate being slidable backwardly along the machine body and being elastically kept urged forwardly, the contact plate having an abutting piece which is abutted against a work including an old shoot and a wire material for supporting the old shoot after the work is set in between the machine body and the guide arm which has been swung open,
(b) the pivot of the guide arm is slidable back and forth with respect to the machine body,
   in a first swing operation in which, in association with the backward movement of the contact plate, the front end portion of the guide arm is pivoted closed with respect to the body, the front end portion of the guide arm is landed near the catching pawl, to cause the catching pawl to hold the one end portion of the binding belt, and
   in a second swing operation in which, after the first pivot operation, the front end portion of the guide arm is pivoted closed with respect to the machine body in association with the swing of the handle, the front end portion of the guide arm is landed near the cutting pawl to cause the cutting pawl to cut the binding belt, and
(c) the work is bound together by twisting both end portions of the binding belt which has been wound around the work, with the twisting means.

In the binding machine, it is preferable that the operation of the handle is locked when the contact plate is moved backwardly.

With the front end portion of the guide arm moved away from the body, the work is set inside the guide arm and abutted against the abutting piece of the contact arm. Under this condition, the contact plate is moved backwardly. In association with the backward movement of the contact plate, the front end portion of the guide arm is swung closed with respect to the machine body. In this first swing operation, the front end portion of the guide arm is landed near the catching pawl, to cause the catching pawl to hold the end portion of the binding belt.

When, under this condition, the contact plate is moved forwardly against the elastic force of the spring, similarly the guide arm is elastically opened moving away from the body, so that the binding belt is stretched between the catching pawl and the front end of the guide arm. Next, after the work together with the binding belt is moved (shifted) forwardly of the body, the handle is swung with the hand. In association with this swing, the front end portion of the guide arm is swung closed with respect to the body. In this second swing operation, the front end portion of the guide arm is landed near the cutting pawl to cause the latter pawl to cut the binding belt. Thus, the work is surrounded by the binding belt. Under this condition, the work is bound together by twisting both end portions of the binding belt with the twisting means.

The operation of the handle is locked when the contact plate is moved backwardly. Hence, no dual operation control will act on the guide arm.

### BRIEF DESCRIPTION OF THE DRAWINGS

FIG. 1 is a side view of an old shoot binding machine according to the invention;
FIG. 2 is a vertical sectional view showing essential components of the machine shown in FIG. 1;
FIG. 3 is a sectional view taken along line A-A in FIG. 2;
FIG. 4 is a sectional view taken along line B-B in FIG. 2;
FIG. 5 is a sectional view taken along line C-C in FIG. 2;
FIG. 6 is a sectional view taken along line D-D in FIG. 2;
FIG. 7 is an explanatory diagram for a description of the start of the first swing operation of the binding machine;
FIG. 8 is an explanatory diagram for a description of the closure of a guide arm in the machine;
FIG. 9 is an explanatory diagram for a description of the catching of a binding belt with a catching pawl;
FIG. 10 is an explanatory cross-sectional view for a description of the catching of the binding belt;
FIG. 11(a) is an explanatory diagram showing the binding belt which is caught, and FIG. 11(b) is also an explanatory diagram showing the binding belt which is cut;
FIG. 12 is an explanatory diagram showing an guide arm which is started to open;
FIG. 13 is an explanatory diagram for a description of the start of the second swing operation of the binding machine;
FIG. 14 is an explanatory diagram showing the guide arm which is being closed;
FIG. 15 is an explanatory diagram for a description of the cutting of the binding belt with the cutting pawl;
FIG. 16 is an explanatory cross-sectional diagram for a description of the start of the cutting of the binding belt with the cutting pawl;
FIG. 17 is an explanatory cross-sectional diagram for a description of the finish of the cutting of the binding belt with the cutting pawl;
FIG. 18 is an explanatory diagram showing the binding belt with its both end portions twisted;
FIG. 19 is an explanatory diagram for a description of an operation of catching the binding belt and cutting the latter with the binding machine; and
FIG. 20 is also an explanatory diagram for a description of an operation of catching and cutting a binding belt with the conventional old shoot binding machine.

### DETAILED DESCRIPTION OF THE PREFERRED EMBODIMENTS

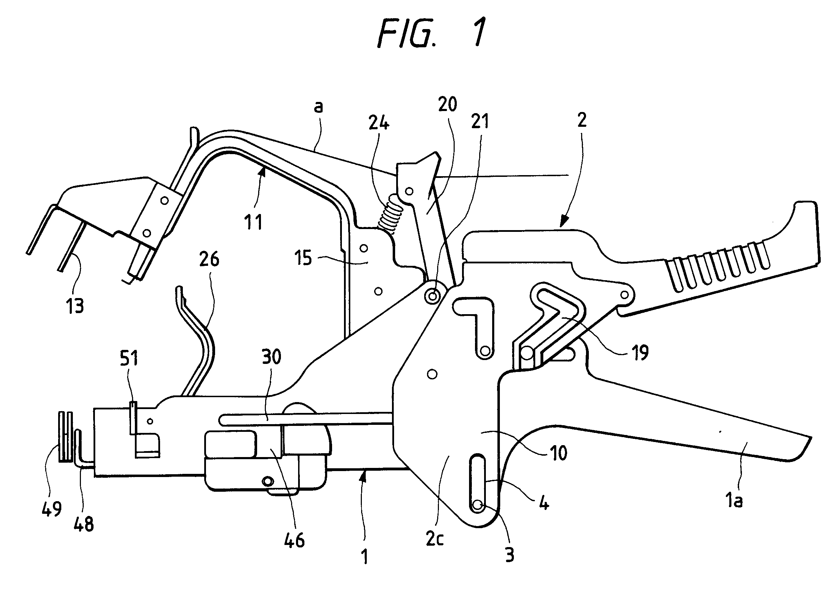

FIG. 1 shows an old shoot binding machine according to the invention. The binding-machine uses a binding belt to bind mainly old shoots of grapevines to wire materials laid over the vine supporting fences. In FIG. 1, reference character a designates the aforementioned binding belt, which is a so-called "paper tie" which is formed by burying a metal wire between two sheets in such a manner that it extends along the central axis of those two sheets.

Further in FIG. 1, reference numeral 1 designates a body of the binding machine body which is elongated in a front-to-rear direction of the machine (hereinafter referred to as "a machine body 1" or merely as "a body 1", when applicable). In the body 1, its essential portion, namely, the front and middle portions are substantially U-shaped in section, and the rear portion includes a grip 1a. The front end portion of the body 1 has a catching pawl 41 (described later) and a cutting pawl 42 (described later).

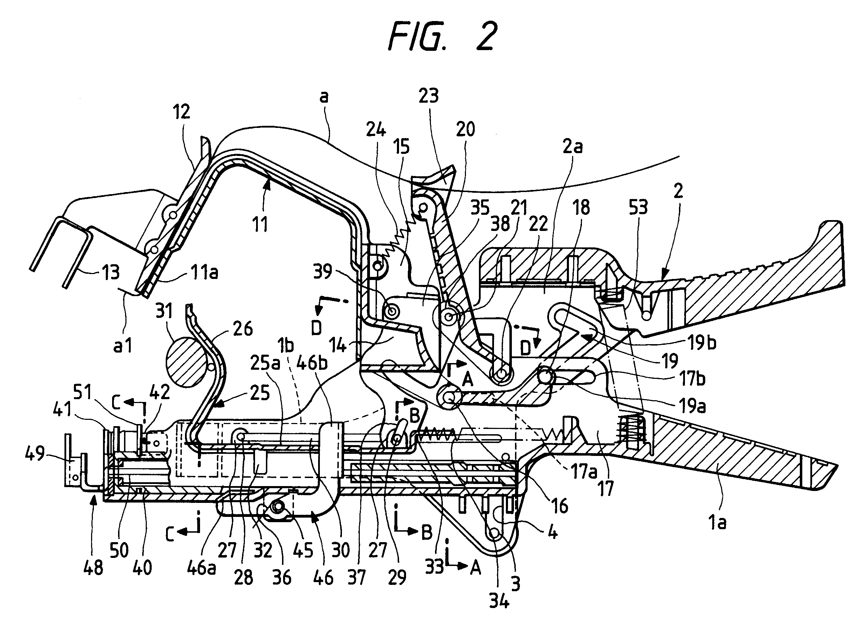

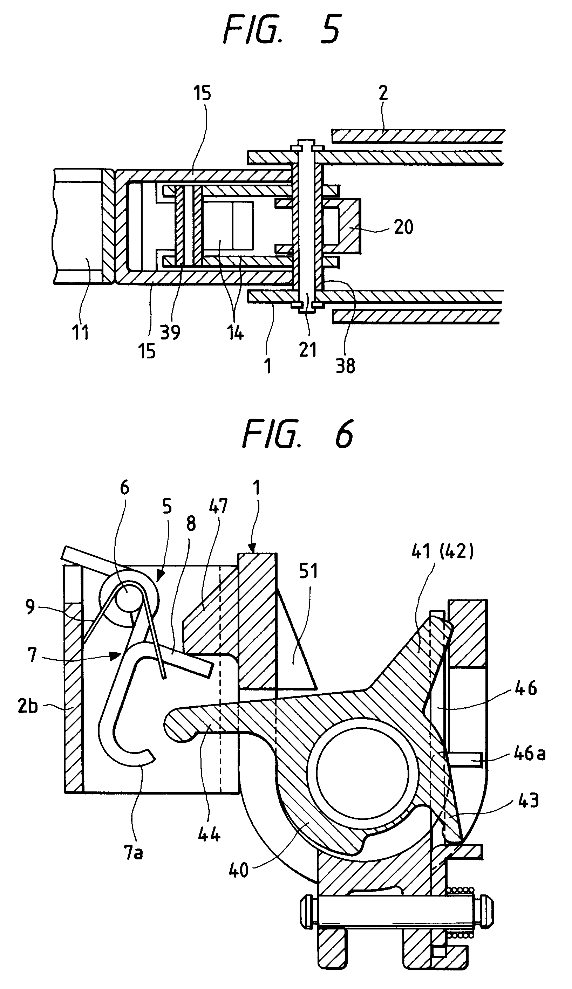

As shown in FIGS. 2 through 5, in the body 1, a handle 2 is pivotably supported by a pivot shaft 3. The handle 2 is substantially Z-shaped as a whole. Its rear end portion is arranged confronted with the grip 1a of the body 1. The aforementioned shaft 3 is engaged with an elongated hole 4 in the handle 2 which extends vertically. The handle is urged to open by the elastic force of a spring 53. The middle portion of the handle is made up of two side plates 2a and 2a which cover both sides of the body 1. One of the side plates 2a extends to cover one side of the front portion of the body 1, thus forming an extended portion 2b. The front end of the extended portion 2b is bent, and, in this region 5, as shown in FIG. 6, a change-over hook 7 is pivotably mounted on a shaft 6. The middle portion of the change-over hook 7 has an engaging piece 8. In addition, the change-over hook 7 is urged by a spring 9 mounted on the shaft 6 so that the hook end 7a of the hook 7, and the engaging piece 8 are pivoted towards the body 1.

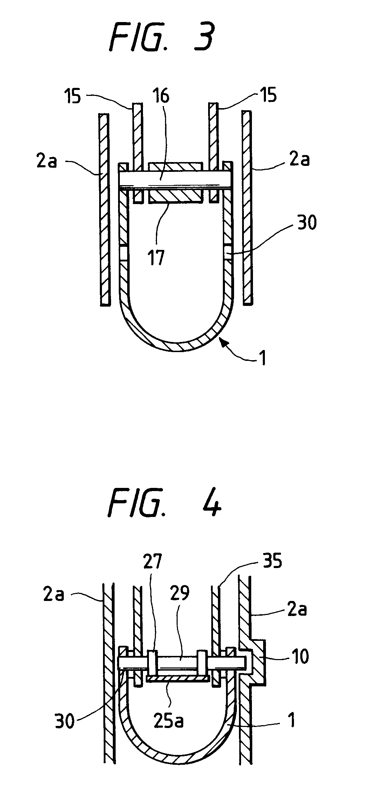

The other side plate 2a of the handle 2 has a U-shaped step 10 as shown in FIG. 4.

A guide arm 11 is pivotably arranged in the body 1 slightly behind the central portion, in such a manner that its front end portion 11a is movable to and from the body 1. The guide arm 11 is curved, or U-shaped, to define a space between itself and the body 1, and has a binding belt guide groove 12 in its front end portion. A fork-shaped retaining piece 13 is formed in front of the guide groove 12. When the guide arm 11 is closed, its front end portion 11a is landed near the catching pawl 41 or the cutting pawl 42.

The rear end portion of the guide arm 11 has an inside block 14. The latter 14 has side boards 15 and 15 at both ends which extend backwardly. A pin 16 is inserted into the base end portions of those side boards 15 and 15, and is slidably engaged with first guide holes 17a which are formed in the side walls of the body 1 in such a manner that they are elongated in the front-to-rear direction (cf. FIG. 3). On the other hand, the inside block 14 is coupled through the pin 16 to the front end of a tension bar 17. The latter 17 has a pin 18 at the rear end. The pin 18 is engaged with second guide holes 17b which are formed in the both side walls of the body 1 in such a manner that they are in parallel with the first guide holes 17a, and the pin is engaged with guide holes 19 which are formed in the side plates 2a and 2a. Each of the guide holes 19 includes a vertical hole 19a, and a V-shaped hole 19b extending from the former 19a.

A guide bar 20 is provided behind the guide arm 11. The middle portion and the base portion of the guide bar 20 are supported by shafts 21 and 22 extended from the body 1, respectively, and the front end portion is formed into a binding-belt guide section 23. A tension spring 24 is connected between the guide bar 20 and the guide arm 11 so that the guide arm 11 is kept urged open by the spring 24.

A contact plate 25 is arranged at the front end portion of the body 1 in such a manner that it is slidable forwardly and backwardly along the body 1. The contact plate 25 is kept elastically urged forwardly. The contact plate 25 includes: a horizontal portion 25a which is elongated in the front-to-rear direction; and a bow-shaped abutting piece 26 which extends from the front end of the horizontal portion 25a while forming right angles with the latter 25a. The horizontal portion 25a has front and rear protruded pieces 27, into which shafts 28 and 29 are inserted, respectively (cf. FIG. 4). Those shafts 28 and 29 are slidably engaged with an elongated guide hole 30 which is formed in the front and middle portions of the side wall of the body 1. The above-described abutting piece 26 is to be abutted against a work 31 which includes: an old shoot which is set in between the body 1 and the guide arm 11 which is opened; and a wire material for supporting the old shoot. The horizontal portion 25a has a tongue piece 32 which extends therefrom in the direction opposite to the direction in which the abutting piece 26 extends.

The rear end portion of the horizontal portion 25a has a hook-shaped bent portion 33. A compression spring 34 is interposed between the bent portion 33 and the grip 1a of the body 1, so that the contact plate 25 is kept urged forwardly.

As is apparent from FIG. 4, when the contact plate 25 is slid backwardly, the rear shaft 29 of the horizontal portion 25a is caused to go in the U-shapes step 10 formed of the side plate of the handle 2.

The guide bar 20 is coupled through an arm link 35 to the contact plate 25. That is, the arm link 35 is a U-shaped plate-like link, and it is arranged between the side boards 15 of the guide arm 11 as shown in FIG. 5. One end portion of the arm link 35 is coupled to the shaft 21 at the middle of the guide bar 20, and the other end portion is coupled through an elongated hole 37 to the rear shaft 29 of the horizontal portion 25a of the contact plate 25. On the above-described one end side, a first hollow pin 38 is mounted on the shaft 21, and a second hollow pin 39 is provided in front of the first hollow pin 38. The first and second hollow pins 38 and 39 are so designed that the first hollow pin 38 is rolled abutting against the rear end faces of the side boards 15 of the inside block 14, and the second hollow pin 39 is rolled abutting against the rear face of the inside block 14.

As shown in FIG. 6, a hollow shaft 40 is rotatably provided in the front portion of the inside of the body 1. The hollow shaft 40, as shown in FIG. 6, has the catching pawl 41 and the cutting pawl 42 which are arranged one after another in a front-to-rear direction. In this embodiment, the catching pawl 41 is provided in front of the cutting pawl 42. In addition, a first protruded piece 43 extends from one side of the hollow shaft 40, and a second protruded piece 44 from the other side.

As shown in FIG. 2, at the front end portion of the body 1, a rotary plate 46 is rotatably supported on a shaft 45 which is located opposite to the contact plate 25. The rotary plate 46 is substantially L-shaped. The middle portion of the L-shaped rotary plate 46 is rotatably supported by the aforementioned shaft 45, and its front end portion 46a is engageable with the first protruded piece 43 of the hollow shaft 40, and the rear bent portion 46b is arranged on the locus of the tongue piece 32 of the contact plate 25, so that, when the contact plate 25 slides backwardly, the bent portion 46b is engaged with the tongue piece 32. The rotary plate 46 is kept urged by a spring 36 so that the bent portion 46b forms right angles with the horizontal portion 25a of the guide plate 25.

The aforementioned second protruded piece 44, as shown in FIG. 6, is engageable with the change-over hook 7 at the front end of the handle 2. The engaging piece 8 extending from the middle of the change-over hook 7 is engageable with a protrusion 47 formed on the side wall of the body 1.

Shaft-shaped twisting means 48 is provided inside the hollow shaft 40. A binding-belt hooking section 49 is formed at the front end of the twisting means 48. The shaft-shaped portion of the twisting section 48 is threaded, so that the latter 48 is moved out of the body 1 while being turned.

The operation (how to use) of the binding machine thus designed will be described.

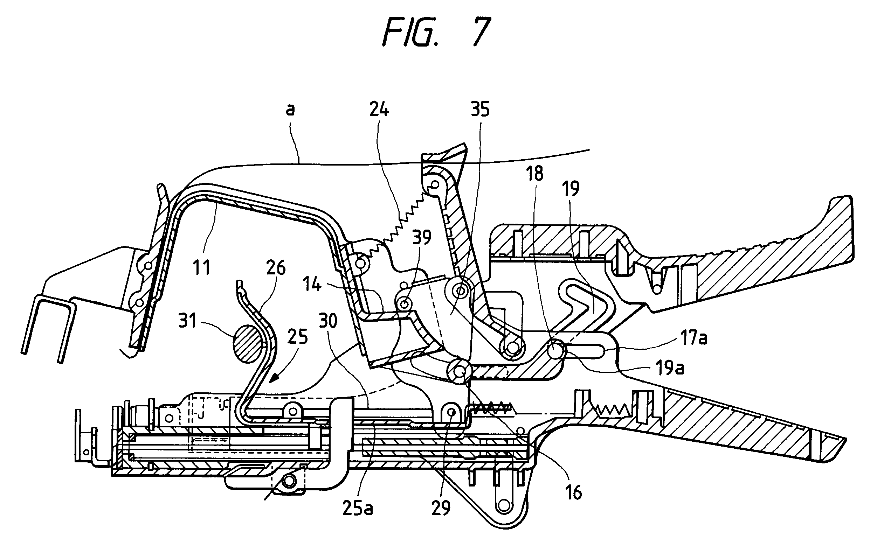

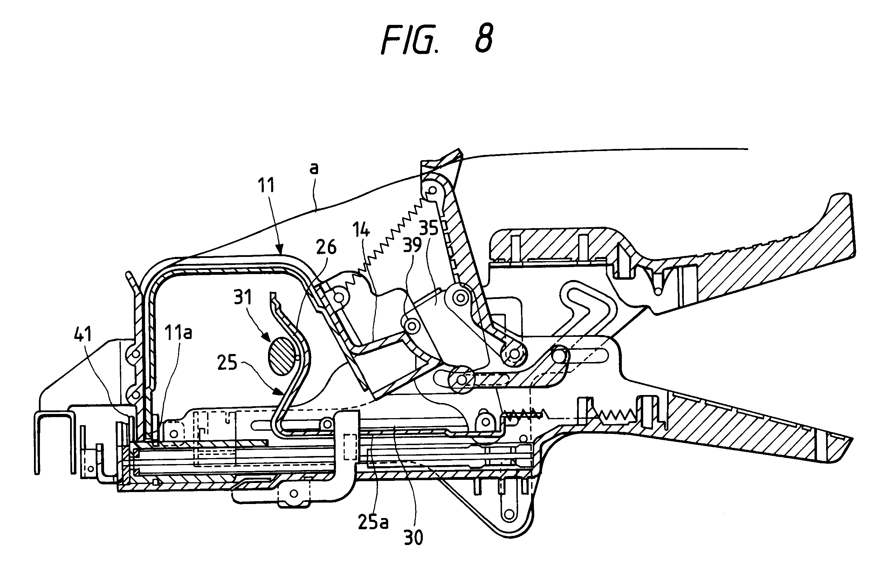

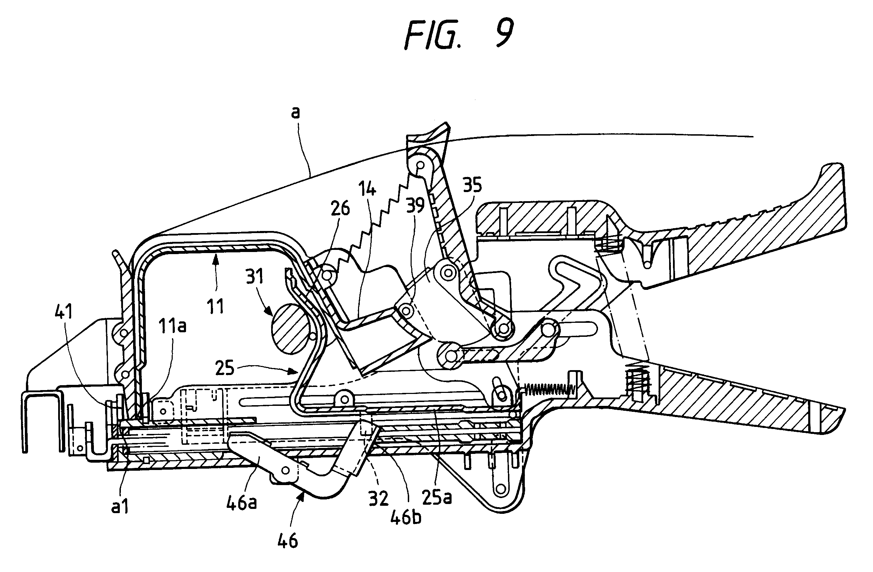

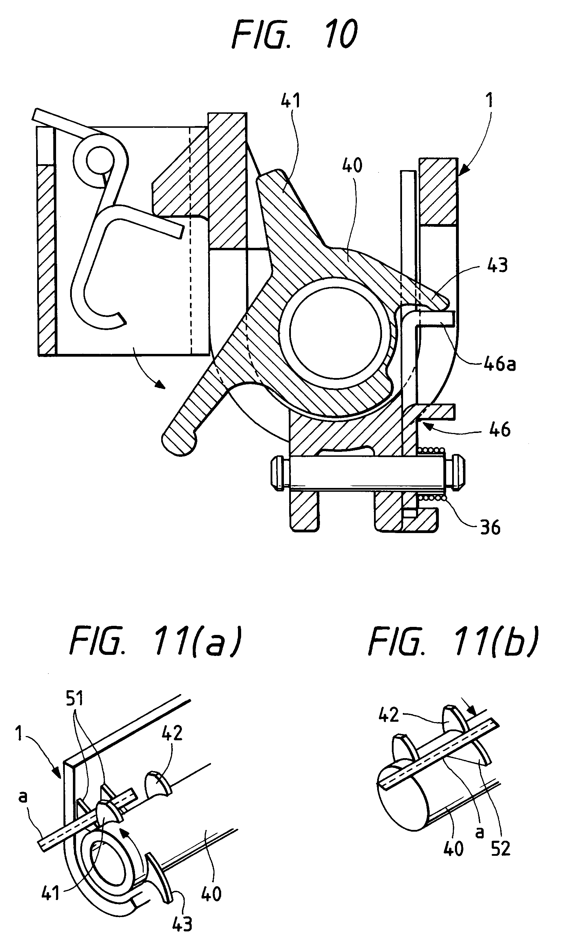

First, the binding belt a is pulled out through the guide groove 12 of the guide arm 11, and its front end portion is bent at right angles and set at the front end of the guide groove. Under this condition, the work 31 to be bound is set in between the body 1 and the guide arm 11 as shown in FIG. 1, and it is pushed against the abutting piece 26 of the contact plate 25. The work 31 is further pushed against the abutting piece 26, so that the contact plate 25 is moved relatively backwardly. In this operation, the tension bar 17 is not moved backwardly, because the rear pin 18 is engaged with the end 19a of the handle guide hole 19. As a result, the arm link 35 is turned as shown in FIG. 7, and the second hollow pin 39 is moved while pushing the rear surface of the inside block 14 of the guide arm 11, so that the guide arm 11 is swung, in a closing mode, against the elastic force of the tension spring 24. In this first swing operation, the guide arm 11 turns about the pin 16. And the front end portion 11a of the guide arm 11 lands near the catching pawl 41 of the body 1 (cf. FIG. 8). When, as shown in FIG. 9, the contact plate 25 is moved backwardly, then its tongue piece 32 strikes against the bent portion 46b of the rotary plate 46 to push it backwardly. Hence, the rotary plate 46 is turned clockwise in FIG. 9, and the front end portion 46a of the rotary plate 46 pushes the first protruded piece 43 of the hollow shaft 40 upwardly as shown in FIG. 10. As a result, the hollow shaft 40 is turned through a predetermined angle in one direction, so that the bent portion a1 of the binding belt a which extends from the end of the guide arm 11 is held being pushed in between a pair of protruded pieces 51 of the body 1.

Even if it is tried to operate the handle 2 in the above-described first swing operation, it is impossible to operate the handle 2. That is, when the contact plate 25 is moved backwardly, as shown in FIG. 4 the rear shaft 29 goes in the U-shaped step 10 of the handle 2. This locking mechanism locks the handle 2; that is, the latter 2 cannot be operated.

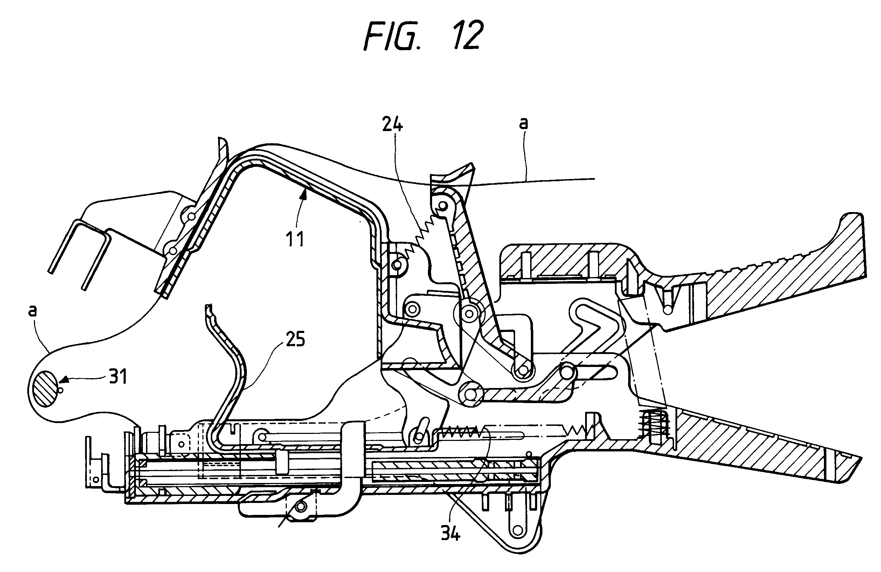

Thereafter, when the body 1 is moved away (backwardly) from the work 31 to be bound, as shown in FIG. 12, the contact plate 25 is moved relatively forwardly by the elastic force of the compression spring 34 while the guide arm 11 is opened by the tension spring 24. Since the front end portion of the binding belt a is held by the catching pawl 41, the binding belt a is stretched between the front end of the guide arm 11 and the body 1; that is, the work 31 to be bound is moved forwardly of the body 1 while being kept pushed against the binding belt a.

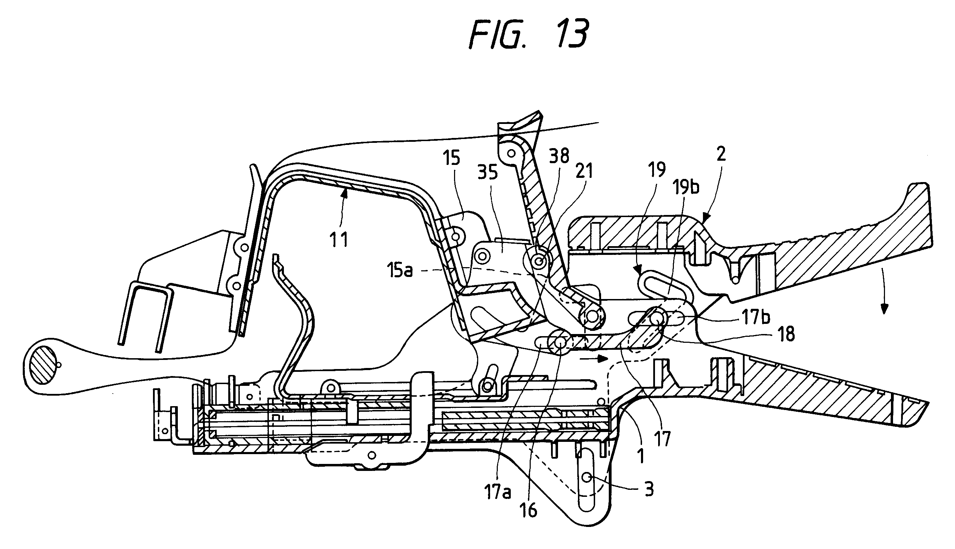

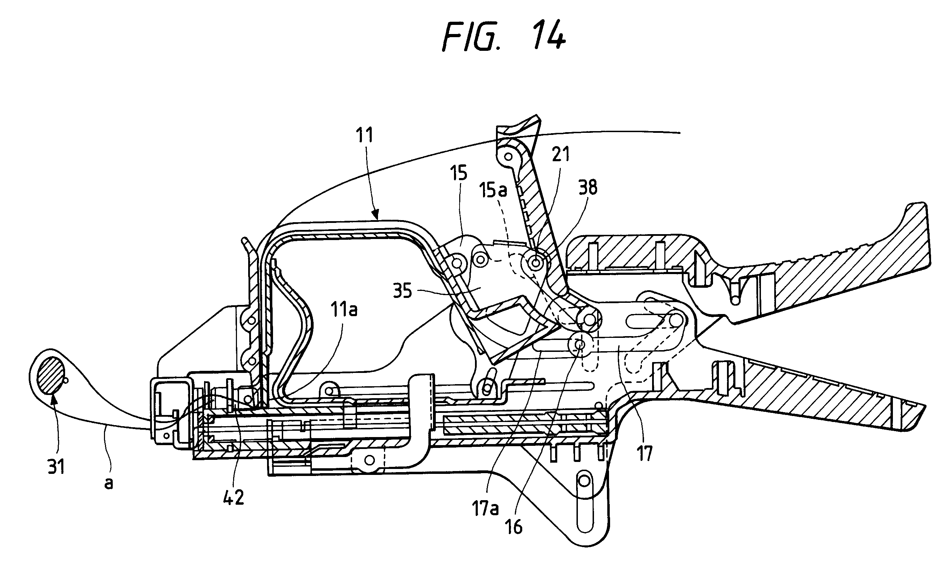

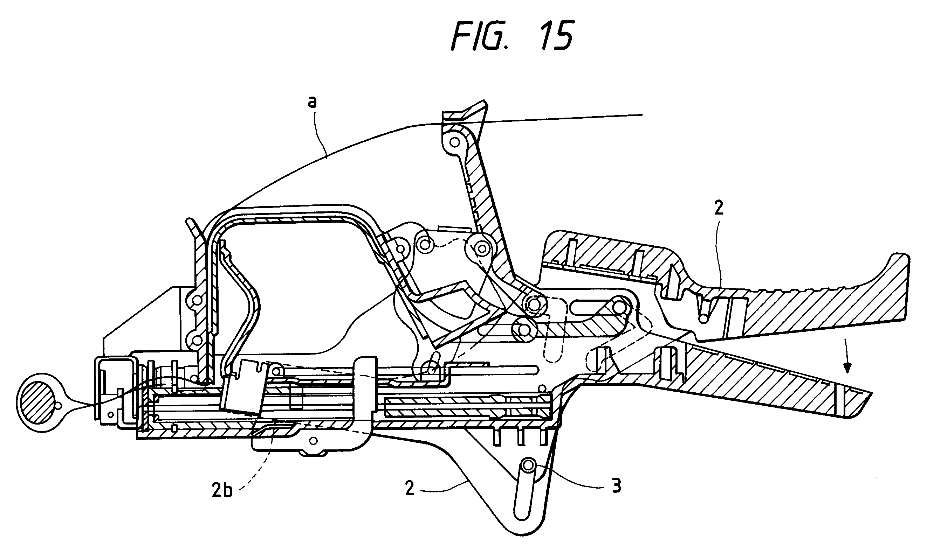

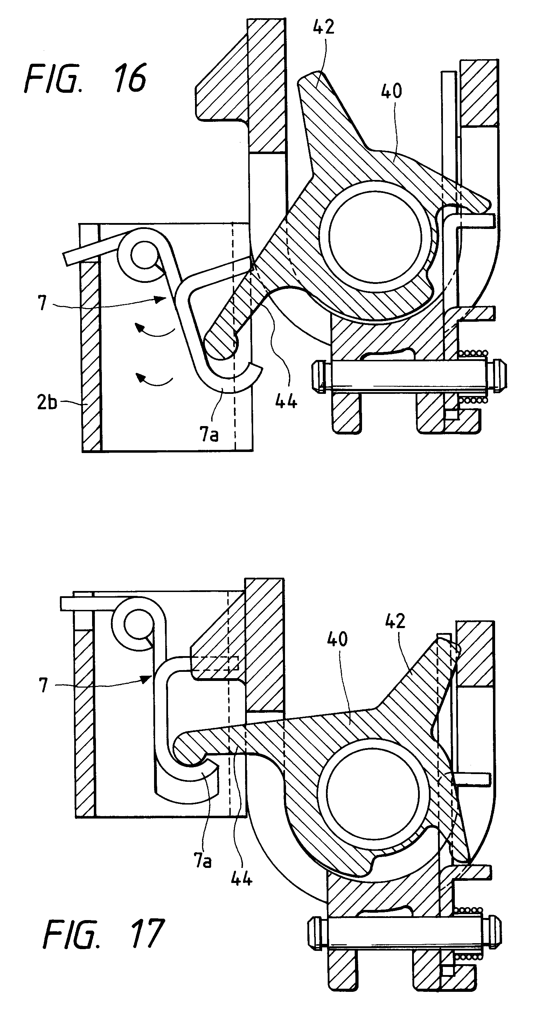

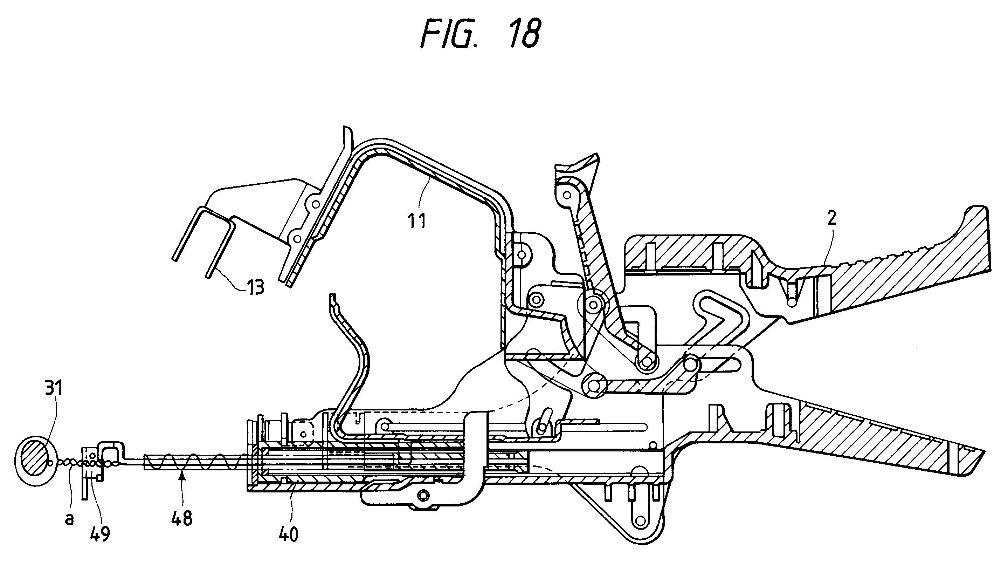

Next, with the handle 2 gripped, the second swing operation is carried out. When the handle 2 is gripped, as shown in FIG. 13, the handle 2 is swung about the shaft 3, and at the same time the rear pin 18 of the tension bar 17 is moved backwardly being guided by the V-shaped portion 19b of the guide hole 19 of the handle 1 and by the second guide holes 17b in the side walls of the body 1. In association with this movement, the base pin 16 of the guide arm 11 is pulled backwardly along the first guide holes 17a in the side walls of the body 1, while the first hollow pin 38 of the arm link 35 is moved being abutted against the rear end face of the side boards 15 of the guide arm 11. Thus, the guide arm 11 is swung in a closing mode. In this operation, the fulcrum of swing (i.e., the above-described pin 16) of the guide arm 11 is moved backwardly, the front end portion 11a of the guide arm 11 is landed near the cutting pawl 14 (cf. FIG. 14). As the handle 2 is further swung as shown in FIG. 15, then the handle 2 is swung about the shaft 3, so that the front end of the prolongation 2b of the handle 2 is raised in FIG. 15. Hence, as shown in FIGS. 16 and 17, the change-over hook 17 of the handle 2 engages with the second protruded piece 44 of the hollow shaft 40 and pushes it, whereby the hollows shaft 40 is swung counterclockwise. Therefore, as shown in FIG. 11(b), the cutting pawl 42 is turned to cooperate with a cutting section 52 formed on the body 1, to cut the binding belt a. At the same time, the binding belt a is released from the catching pawl 41. Thus, the work 31 is bound with the binding belt a one turn. Under this condition, the body 1 is further moved backwardly. In this case, the binding belt a is retained by the retaining piece 13 of the guide arm 11, and is caught by the front hooking section 49 of the twisting means 48. Hence, as shown in FIG. 18, the twisting means 48 is pulled out of the hollow shaft 40. More specifically, the twisting means 48 is pulled out while being turned, so that both end portions of the binding belts a are twisted. Thus, the binding operation has been accomplished, and the binding belt a is released from the retaining piece 13 and the hooking section 49.

The binding belt is caught and cut as shown in FIG. 19.

In the binding-belt cutting operation, the end portion of the binding belt a is cut while being kept bent. Hence, part of the bent portion is left, as it is, at the front end portion 11a of the guide arm, so that the machine becomes ready for the next shoot binding operation when the guide arm 11 is opened.

In order to achieve one binding operation with the old shoot binding machine, it is necessary to swing the guide arm twice. However, with the binding machine, the first swing operation is effected in association with the backward movement of the contact plate; that is, in this case, it is unnecessary to grip the handle. As is apparent from the above description, for one binding operation, the handle is gripped only once. Therefore, the machine of the invention is high in work efficiency.

When the guide arm is swung closed with respect to the body, the front end portion of the guide arm is landed near the catching pawl in the first swing operation, and near the cutting pawl in the second swing operation. The catching pawl is arranged in front of the cutting pawl. Hence, the number of binding belts cut with the cutting pawl is only one; that is, no waste binding belt is formed.

In addition, the handle is operated only once, and the cutting load is reduced. This feature allows the operator to continue the binding work for a long period of time.

Even if, in the binding work, the handle is operated by mistake before the work is set inside the guide arm, the front end portion of the guide arm is landed near the cutting pawl, and therefore no trouble occurs with the machine.

In the machine of the invention, the operation of the handle is locked when the contact plate is moved backwardly. This will positively prevent the erroneous operation.

## Claims

1. An old shoot binding machine comprising:
a machine body extending in a front-to-rear direction of said machine, and having a front end portion, a catching pawl and a cutting pawl formed on said front end portion thereof, said catching and cutting pawls being arranged one after another;
a guide arm having a bent portion to form a space with said body, a front end portion to hold an end portion of a binding belt and a pivot on which said guide arm pivotably arranged, such that said front end portion thereof is moved to and from said front end portion of said machine body, and elastically urged so as to be normally opened; and
binding-belt twisting means on said machine body, for twisting said binding belt,
CHARACTERIZED in that,
(a) said old shoot binding machine further comprises a contact plate being slidable backwardly along said machine body and being elastically kept urged forwardly, said contact plate having an abutting piece which is abutted against a work including an old shoot and a wire material for supporting said old shoot after the work is set in between said machine body and said guide arm which has been swung open,
(b) said pivot of said guide arm is slidable back and forth with respect to said machine body, in a first swing operation in which, in association with the backward movement of said contact plate, said front end portion of said guide arm is pivoted closed with respect to said body, said front end portion of said guide arm is landed near said catching pawl, to cause said catching pawl to hold said one end portion of said binding belt, and
in a second swing operation in which, after said first pivot operation, said front end portion of said guide arm is pivoted closed with respect to said machine body in association with the swing of said handle, said front end portion of said guide arm is landed near said cutting pawl to cause said cutting pawl to cut said binding belt, and
(c) said work is bound together by twisting both end portions of said binding belt which has been wound around said work, with said twisting means.

2. An old shoot binding machine according to claim 1, CHARACTERIZED by comprising:
a locking mechanism for locking said handle when said contact plate is moved backwardly.

3. An old shoot binding machine according to either one of claim 1 or 2, CHARACTERIZED in that said catching pawl is provided in front of said cutting pawl.

4. An old shoot binding machine according to either one of claims 1, 2 or 3, CHARACTERIZED in that said abutting piece is curved inwardly.

5. An old shoot binding machine according to either one of claims 1, 2, 3 or 4, CHARACTERIZED in that an inside block is provided with said arm at rear end portion thereof, an arm link is coupled to said contact plate, and the arm link has a first hollow pin abutting against the rear ends of said side board of said inside block in the first swing operation and a second hollow pin abutting against the rear face of said inside block in the second swing operation.
